(19) Europäisches Patentamt / European Patent Office / Office européen des brevets

(11) **EP 3 223 189 B1**

# (12) EUROPEAN PATENT SPECIFICATION

(45) Date of publication and mention
of the grant of the patent:
**23.01.2019 Bulletin 2019/04**

(51) Int Cl.:
**G06K 9/42** *(2006.01)* **G06K 9/46** *(2006.01)*
**G06K 9/62** *(2006.01)* **G06K 9/00** *(2006.01)*

(21) Application number: **16161706.3**

(22) Date of filing: **22.03.2016**

(54) **METHOD AND APPARATUS FOR DETERMINING A SIMILARITY MEASURE BETWEEN DRAWINGS**

VERFAHREN UND VORRICHTUNG ZUR BESTIMMUNG EINER ÄHNLICHKEITSMESSUNG ZWISCHEN ZEICHNUNGEN

PROCÉDÉ ET APPAREIL POUR DÉTERMINER UNE MESURE DE SIMILARITÉ ENTRE DES DESSINS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.09.2017 Bulletin 2017/39**

(73) Proprietor: **Intelligent Insights GmbH**
**3092 Liebefeld (CH)**

(72) Inventors:
• **Schmidt, Roman**
**3097 Liebefeld (CH)**
• **Riesen, Kaspar**
**3047 Bremgarten (CH)**

(74) Representative: **Vesterinen, Jussi Tapio et al**
**LUMI IP GmbH**
**Jägerweg 12**
**3014 Bern (CH)**

(56) References cited:
**EP-A2- 0 391 044    EP-A2- 0 838 945**
**US-A- 5 757 959**

• **LOPRESTI D P ET AL: "INK MATCHING OF CURSIVE CHINESE HANDWRITTEN ANNOTATIONS", INTERNATIONAL JOURNAL OF PATTERN RECOGNITION AND ARTIFICIAL INTELLIGENCE (IJPRAI), WORLD SCIENTIFIC PUBLISHING, SI, vol. 12, no. 1, 1 February 1998 (1998-02-01), pages 119-140, XP000753307, ISSN: 0218-0014, DOI: 10.1142/S0218001498000099**
• **"A Novel Software Toolkit for Graph Edit Distance Computation" In: K. Riesen et al.: "Graph-Based Representations in Pattern Recognition", 15 May 2013 (2013-05-15), Springer Berlin Heidelberg, XP002761390, ISBN: 978-3-642-38221-5 vol. 7877, pages 142-151, DOI: 10.1007/978-3-642-38221-5_15, * Section 1 * * Section 3 ***
• **XI-YANG LIU ET AL: "An Enhanced Drawing Reproduction Graphical Password Strategy", JOURNAL OF COMPUTER SCIENCE AND TECHNOLOGY, KLUWER ACADEMIC PUBLISHERS, BO, vol. 26, no. 6, 28 November 2011 (2011-11-28), pages 988-999, XP019985351, ISSN: 1860-4749, DOI: 10.1007/S11390-011-1195-7**

**Description**

FIELD OF THE INVENTION

The invention relates to the field of pattern recognition techniques. In particular, but not exclusively, the invention relates to an automated or computer-implemented method of determining a similarity measure between an input drawing of a user and at least one reference drawing. Drawings referred to in the present invention may be, for instance, hand drawings or handwritten signatures. The invention also relates to an apparatus arranged to carry out the method.

BACKGROUND OF THE INVENTION

The need for a similarity measure for comparing two drawings, also referred to as sketches, arises in problems such as interactive graph drawing, the indexing or browsing of large sets of graphs or in user authentication methods. Most of the currently available comparison algorithms operate at the sketch content level. In other words, these algorithms try to understand what information the sketch contains. These algorithms typically try to extract feature vectors from the sketches. If feature vectors are used to characterise the drawings with a given number of numerical features, the Euclidean distance or other (dis)similarity measures can be used for this task (eg the correlation coefficient or others). Yet, if this algorithm is used for example for authentication, then this requires that all drawings are described by the same number of features, regardless of the size and/or the complexity of the actual sketch. The above algorithms have also the disadvantage that the amount of data that needs to be processed is very high. Furthermore, the comparison results are not always sufficiently reliable.

One currently widely researched field, where the methods of determining a similarity measure between two sketches are used, is user authentication. A draw metric user authentication system requires users to draw a sketch on a canvas. The drawn sketch may also be a handwritten signature. A well-known system in this category is "Draw-a-Secret (DAS)", in which a user is asked to draw a simple picture on a two-dimensional grid. The positions of the grid cells and the order of their crossing are stored for later comparison. If the user's input drawing crosses the same grid cells in the same order, the user is authenticated. However, this approach has not been very successful. Other systems have been proposed, but often they are either inefficient in terms of data processing, or the authentication result is not sufficiently reliable.

A publication entitled "Ink matching of cursive Chinese handwritten annotations" from Daniel P. Lopresti, XP000753307 discloses a handwriting recognition system. In a first step, the pixels are grouped to stroke segments (movements from pen-down to pen-up). In a second step, 13 numerical features are extracted from these segments. In a third step, by means of vector quantisation, each stroke is mapped to a unique stroke type from a given alphabet.

A publication entitled "A Novel Software Toolkit for Graph Edit Distance Computation" from Kaspar Riesen et al., XP002761390 discloses a self-standing software tool integrating suboptimal graph matching algorithms. The idea of this software tool is that a powerful and flexible algorithmic framework for graph edit distance computation can easily be adapted to specific problem domains via a versatile graphical user interface. The aim of the paper is twofold. First, it reviews the implemented approximation methods and second, it thoroughly describes the features and application of the novel graph matching software.

A publication entitled "An Enhanced Drawing Reproduction Graphical Password Strategy" from Xi-Yang Liu et al., XP019985351 discloses a new graphical password scheme called YAGP, which is an extension of the Draw-A-Secret (DAS) scheme. The main difference between YAGP and DAS is soft matching. The concepts of the stroke-box, image-box, trend quadrant, and similarity are used to describe the images characteristics for soft matching. The reduction in strict user input rules in soft matching improves the usability and therefore creates a great advantage. The denser grid granularity enables users to design a longer password, enlarging the practical password space and enhancing security. Meanwhile, YAGP adopts a triple-register process to create multi-templates, increasing the accuracy and memorability of characteristics extraction.

EP0391044 (A2) discloses a pattern generation method for registering handwriting and a method for updating same that facilitates the obtaining of a registration pattern that reflects accurately the characteristics of an individual handwritten signature. Dynamic programming matching is used to obtain a cumulative error among a plurality of input patterns in the form of a distortion function, and this distortion function is used for shape averaging and time distortion averaging of input patterns.

There is thus a need for a more advanced method of determining a similarity measure between a drawing input by a user and at least one reference drawing. Furthermore, it would be desirable to be able to use this method to reliably authenticate a user.

BRIEF DESCRIPTION OF THE INVENTION

The present invention aims to overcome at least some of the disadvantages of prior art systems, and to meet the objectives described above. To this end, a method of determining a measure of similarity between an input drawing of a user and at least one reference drawing according to the invention is described in the attached claim 1. Further variants of the invention are described in the dependent claims. According to the proposed method, there is no need interpret the actual information content of the input drawing to get the similarity measure. Thus, there is no need to generate any feature vectors or to perform any other kind of feature extraction, for example. The present invention can be thought of as operating at the raw data (ie pixel or voxel) level as opposed to the content information level. This also means that the proposed method is reliable and efficient in terms of data processing.

BRIEF DESCRIPTION OF THE DRAWINGS

The invention will now be described in more detail with reference to the attached drawings, in which:

Figure 1 shows schematically an input canvas on which is drawn an exemplary input drawing.

Figure 2 shows diagrams illustrating the behaviour of a substitution cost function as employed in a method according to an example of the present invention.

Figure 3 is a flow chart illustrating an exemplary authentication method according to an example embodiment of the present invention.

DETAILED DESCRIPTION OF THE INVENTION

It should be noted that the figures are provided merely as an aid to understanding the principles underlying the invention, and should not be taken as limiting the scope of protection sought. Where the same reference numbers are used in different figures, these are intended to indicate similar or corresponding features. It should not be assumed, however, that the use of different reference numbers is intended to indicate any particular degree of difference between the features to which they refer. An embodiment of the present invention is described next in more detail in the context of user authentication by means of freehand sketches (such as, for instance, handwritten signatures). However, it is to be noted that the teachings of the present invention are not limited to their application in user authentication systems. In the present invention, the word drawing may be understood to cover for example hand drawings and/or handwritten signatures.

Traditionally, registration of new users to restricted domains and subsequent user authentication has been based on a unique username and a user-defined password. In the following description, it is proposed to register and authenticate users by means of freehand drawings (rather than passwords), also referred to as sketches in the following description, drawn by the user. It is to be noted that in the present description, a sketch is to be understood to cover both two and three-dimensional (2D and 3D) movements of a drawing instrument (eg finger, stylus, wand) in a canvas space. A canvas space may comprise a two- or three-dimensional array of picture elements (eg pixels or voxels) which become part of the drawing when the drawing instrument moves across or through the particular picture element. The array may comprise a raster (ie orthogonal) or any other suitable arrangement of the picture elements.

For example, a web application may be used to capture $k \geq 1$ similar reference sketches from a new user in a registration phase. These reference sketches need not be constrained in complexity or content type. However, the proposed method ensures that the $k$ reference sketches preserve a certain similarity to each other. Once a user is registered (with a username $u$ and $k$ valid reference sketches), the authentication can be carried out by computing the dissimilarity of the input sketch (provided by the claimed user $u$) to the $k$ stored reference sketches of the user $u$. If this dissimilarity is below a certain threshold, the user is authenticated. The proposed method computes sketch dissimilarity based on an adapted version of a string edit distance method. This adaptation takes into account the peculiarity of online drawn sketches by means of a novel cost model.

The proposed method can be roughly subdivided into two principal phases, namely the registration of a new user and the authentication of a registered user. Both phases may use the computation of a dissimilarity measure between two sketches. The two principal phases as well as the process of dissimilarity computation are described below in more detail.

In the proposed process, registering a new user may comprise three different steps: a) capture and formal representation of the sketches, b) verify validity of these sketches, and c) define the centre coordinates of the captured sketches. These three steps are described in detail below.

Capturing initial candidate sketches

For registering a new user with a unique username u to a certain application or restricted domain, $k$ ($k \geq 1$) different sketches showing the same subject are drawn by the user. $k$ is an application-specific parameter with typical values from 1 to 5, or more preferably from 3 to 5, or more specifically either 3, 4 or 5. The greater the value of $k$, the higher is the stability of the complete system. On the other hand, obliging the user to provide more than for instance 5 sketches for registration might be felt as too onerous and thus negatively affect the acceptance of the authentication system. The subject of the $k$ sketches may be chosen by the user (eg a star, a house, a flower, the user's initials, the user's signature etc). Moreover, also according to this example, the level of complexity (or detail) of these sketches can be defined by the user. That is, the user may decide to draw a simple, primitive sketch, such as a square, or a complex sketch that consists of several subparts, such as a sketch comprising a star, his/her signature and vertical lines placed in the upper left corner, in the centre and in the lower part of the capturing canvas, respectively.

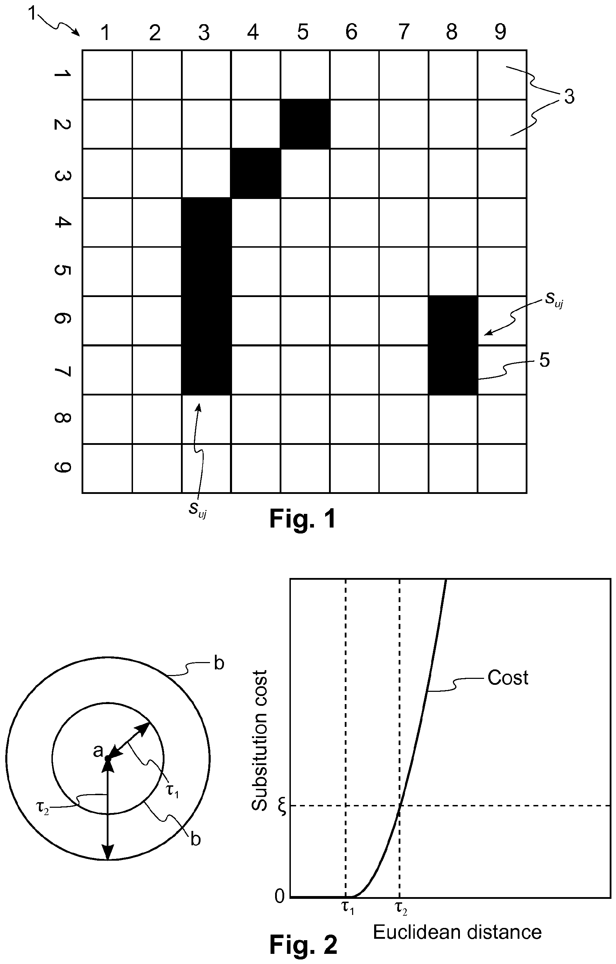

For the basic task of capturing the sketches from users, in this example a web application based on hypertext markup language 5 (HTML5) exploiting some specific canvas elements that allow dynamic rendering and capturing of 2D line strokes defined by the user is used. Hence, the proposed user registration and authentication system runs on virtually any type of computing device, such as a desktop computer, notebook, tablet, smartphone etc, with graphical user interface and browser capabilities. For the sake of simplicity it is assumed in the examples below that the strokes of the sketches are one pixel wide and the sketch pixels are black on a white canvas (both of these constraints could in reality be generalised). If the underlying device is equipped with a touchscreen, the sketches can be drawn with a suitable stylus or finger. Alternatively a mouse, a touchpad, 3D sensor system or other input device could be used to draw the sketch. The size of the capturing or input canvas 1 is an application-specific parameter. Without loss of generality, in this example as shown in Figure 1, it is assumed from now on that the capturing canvas has a square shape with a size of $N \times N$ raster elements 3, referred to as pixels (eg $N$ = 200).

The result of the initial sketch acquisition process for the user u is a set $S_u$ of $k$ candidate reference sketches $\{s_{u1}, ..., s_{uk}\}$. Each sketch $s_{uj} \in S_u$ comprises a set of $n_{uj}$ pixels 5, that define the strokes of the sketch (eg the black pixels in the capturing canvas 1). These black pixels 5 that define the sketch are also referred to as sample points in this description. In this example, each sample point is described by three numerical features, namely the ($x$, $y$) coordinates of the sample point in the canvas element and a corresponding time stamp information t (in units of milliseconds, ms, for example). Formally, we have

$$s_{uj} = \left\{ \left( x_1^{(uj)}, y_1^{(uj)}, t_1^{(uj)} \right), \left( x_2^{(uj)}, y_2^{(uj)}, t_2^{(uj)} \right), ..., \left( x_{nj}^{(uj)}, y_{nj}^{(uj)}, t_{nj}^{(uj)} \right) \right\}.$$

It is to be noted that the time stamp of the first sample point can be set to zero $\left( t_1^{(uj)} = 0 \right)$ and $t_1^{(uj)} < t_2^{(uj)} < \cdots < t_{nj}^{(uj)}$. That is, the 3-tupels in $s_{uj}$ are sorted in ascending order with respect to their relative capturing time, ie the i-th sample point is captured $t_i^{(uj)}$ ms after the user has started drawing the sketch.

Figure 1 shows a simplified example square canvas 1 of side-length $N$ = 9. Figure 1 also shows a representation $s_{uj}$ of a simple sketch. The term $s_{uj}$ is used to indicate that the sketch is the $j$-th sketch drawn by the user u. In this example $s_{uj}$ = {(3,7,0), (3,6,4), (3,5,7), (3,4,10), (4,3,14), (5,2,18), (8,6,32), (8,7,36)}. It can be seen that the user u started the sketch at the picture element having position (3,7). The difference in time between the first six sample points is relatively constant, namely 3-4 ms. Between the sixth and seventh sample point, a difference of 14 ms can be observed. Then the two remaining pixels of the sketch are drawn on the righthand part of the canvas from top to bottom.

Checking validity of candidate reference sketches

Given the candidate reference sketches $S_u$ = {$s_{u1}$, ..., $s_{uk}$} drawn by the user u, it can be verified whether or not these $k$ sketches meet a predetermined quality criterion for use as reference drawings. In particular, it can be verified whether or not the candidate sketches are similar enough to each other to serve as a basis for the subsequent authentication process.

In the proposed method, a candidate reference sketch $s_{ui} \in S_u$ is determined to be valid if a measure of its dissimilarity to the median reference sketch $s_{um} \in S_u$ is below a certain threshold $\theta$. The median reference sketch $s_{um}$ for the user u may be the candidate reference sketch which minimises the sum of the pairwise edit distances between itself and the other ($k$ - 1) sketches of the user u, for example. Formally, the median sketch $s_{um}$ of the user u is thus defined by

$$s_{um} = arg \min_{s_{ui} \in S_u} \sum_{\substack{j=1,\ldots,k \\ i \neq j}} d(s_{ui}, s_{uj}).$$

It is to be noted that, when the dissimilarity function d builds a metric (in particular when d is symmetric, ie $d(s_{ui}, s_{uj}) = d(s_{uj}, s_{ui})$ and $d(s_{ui}, s_{ui}) = 0$), one has to compute $k (k - 1)/2$ (rather than $k^2$) distances only. That is, in this case the distances $d(s_{ui}, s_{uj}) \forall i = 1, \ldots, (k - 1)$ and $j = (i + 1), \ldots k$ are sufficient for the determination of the median sketch $s_{um}$.

By way of example, Algorithm 1 takes the candidate reference sketches $S_u = \{s_{u1}, \ldots, s_{uk}\}$, the median reference sketch $s_{um} \in S_u$ and the threshold $\theta > 0$ as parameters, and subdivides $S_u$ into two sets V and R with valid and rejected sketches respectively, and where ($V \cup R = S_u$ and $V \cap R = \emptyset$).

| Algorithm 1: Check-Validity ($\boldsymbol{S_u} = (\boldsymbol{s_{u1}}, \ldots, \boldsymbol{s_{uk}}), \boldsymbol{s_{um}}, \theta$) | |
| --- | --- |
| 1: | $\boldsymbol{V}$ = { } and $\boldsymbol{R}$ = { } |
| 2: | for $\boldsymbol{i} = \boldsymbol{1}, \ldots, \boldsymbol{k}$ do |
| 3: | if $\boldsymbol{d(s_{um}, s_{ui})} < \theta$ then |
| 4: | $\boldsymbol{V} = \boldsymbol{V} \cup \{\boldsymbol{s_{ui}}\}$ |
| 5: | else |
| 6: | $\boldsymbol{R} = \boldsymbol{R} \cup \{\boldsymbol{s_{ui}}\}$ |
| 7: | end if |
| 8: | end for |
| 9: | return $V$ and $R$ |

Note that the median reference sketch $s_{um}$ is valid by definition, since its edit distance to itself is zero and thus smaller than the threshold $\theta > 0$. In the best case, all candidate reference sketches are valid, ie all sketches in $S_u$ are similar to the median reference sketch. Yet, in general, one has to assume that the initial set of candidate reference sketches $S_u$ contains $q > 0$ invalid reference sketches which are added to the set R by Algorithm 1 (ie $|R| = q$). These invalid reference sketches are removed from $S_u$, ie $S_u = S_u \setminus R$. In this case, the user u is asked to provide $q$ new candidate sketches, which are in turn added to $S_u$. Based on this new set $S_u$, the median sketch $s_{um} \in S_u$ is recomputed and Algorithm 1 is called with the new set $S_u$ and the (possibly) new median reference sketch $s_{um}$. This process can be repeated until $k$ valid sketches are available for the user u, ie until set $R$ remains empty when Algorithm 1 is called. Algorithm 2 summarizes this iterative process.

| Algorithm 2: Capture-Sketches ($\theta$) | |
| --- | --- |
| 1: | Capture $k$ candidate sketches ($\boldsymbol{S_u} = (\boldsymbol{s_{u1}}, \ldots, \boldsymbol{s_{uk}})$ from user u |
| 2: | Compute median sketch $\boldsymbol{s_{um}} \in \boldsymbol{S_u}$ |
| 3: | $(\boldsymbol{V}, \boldsymbol{R}) \leftarrow$ Check-Validity ($\boldsymbol{S_u}, \boldsymbol{s_{um}}, \theta$) |
| 4: | while $\boldsymbol{R} \# 0$ do |
| 5: | $\boldsymbol{S_u} = \boldsymbol{S_u} \setminus \boldsymbol{R}$ |
| 6: | Capture $|\boldsymbol{R}|$ new candidate sketches from user u and add them to $\boldsymbol{S_u}$ |
| 7: | Compute median sketch $\boldsymbol{s_{um}}$ from $\boldsymbol{S_u}$ |
| 8: | $(\boldsymbol{V}, \boldsymbol{R}) \leftarrow$ Check-Validity ($\boldsymbol{S_u}, \boldsymbol{s_{um}}, \theta$) |
| 9: | end while |
| 10: | return $\boldsymbol{S_u}$ |

Defining a bounding box and centre coordinates

A bounding box that encloses all $k$ sketches may then be defined. Formally, we seek the largest and smallest $x$ and $y$ coordinates that occur in the set of $k$ valid sketches $S_u = \{s_{u1}, \ldots, s_{uk}\}$. That is, for all $j = 1, \ldots, k$ and $i = 1, \ldots, n_j$ we have

$$x_{umin} \leq x_i^{(uj)}; y_{umin} \leq y_i^{(uj)}; x_{umax} \leq x_i^{(uj)}; y_{umax} \leq y_i^{(uj)}.$$

It is to be noted that the minimal values $x_{umin}$ and $y_{umin}$ must not necessarily stem from the same sketch $s_{uj}$ (the same accounts for the maximum values $x_{umax}$ and $y_{umax}$, of course). Given the two corner points $x_{umin}$, $y_{umin}$ and $x_{umax}$, $y_{umax}$ of this bounding box, it is possible to define the centre coordinates $\bar{x}_u, \bar{y}_u$ for the $k$ sketches of user $u$ by

$$\bar{x}_u = \frac{x_{umax} - x_{umin}}{2} \text{ and } \bar{y}_u = \frac{y_{umax} - y_{umin}}{2} .$$

The set of valid reference sketches $S_u = \{s_{u1} ..., s_{uk}\}$, as well as the corresponding centre coordinates $\bar{x}_u, \bar{y}_u$, are stored for the successfully registered user u. In a particular embodiment of the invention, other standard scaling and/or translation operations might be applied to the $k$ valid sketches of *user u*.

Next, an example of an authentication process according to the present invention is explained in more detail. According to this example, the authentication process for the registered user $u$ can be carried out as follows. First, the claimed user $u$ draws an input sketch on or in a suitable array of picture elements. This array is referred to as the input canvas. The input sketch is formally represented as a list *of n ordered sample points* $s = \{(x_1, y_1, t_1), (x_2, y_2, t_2), ..., (x_n, y_n, t_n)\}$ as outlined above. The input sketch can then be normalised. To this end, the centre coordinates $\bar{x}_s, \bar{y}_s$ may be computed for sketch $s$ using a method such as that explained above for determining the centre coordinates of the reference sketches. Then, the input sketch $s$ may be translated such that its centre coordinates $\bar{x}_s, \bar{y}_s$ substantially coincide with the reference centre coordinates $\bar{x}_u, \bar{y}_u$ (ie the centre coordinates of the bounding box which encloses all valid reference sketches $S_u = \{s_{u1}, ..., s_{uk}\}$) of the user $u$. Formally, the $x,y$ coordinate values of all $n$ sample points in s are replaced by $(x_i - \Delta x, y_i - \Delta y, t_i)$, where $\Delta x = \bar{x}_u - \bar{x}_s$ and $\Delta y = \bar{y}_u - \bar{y}_s$. It is to be noted that the outlined normalisation process can be omitted in a specific embodiment of the present invention. Moreover, the invention is not limited to this specific translation method but can be employed with any other normalisation technique (such as scaling, translating, de-skewing, etc.)

In order to authenticate the input sketch of the putative user $u$, the normalised sketch $s$ is preferably compared with all $k$ reference sketch instances $S_u = \{s_{u1}, ..., s_{uk}\}$ of the user $u$ using a predetermined dissimilarity model. That is, for a given input sketch $s$ provided by the claimed user $u$, pairwise distances $d(s, s_{u1}), ..., d(s, s_{uk})$ to each saved reference sketch are obtained. The minimum $min_{i=1,...,k}d(s, s_{ui})$ of these distances serves as a distance value $d(s,u)$ of the input sketch $s$ drawn by the claimed user $u$ to the stored sketches of the registered user $u$ (rather than the minimum distance $min_{i=1,...,k}d(s, s_{ui})$, also the mean distance $1/k \sum_{i=1,...,k}d(s, s_{ui})$ or the maximum distance $max_{i=1,...,k}d(s, s_{ui})$ can be used to implement the reference distance $d(s,u)$). If this distance value $d(s,u)$ is below a predetermined threshold $\theta$, a positive match is returned. In other words, the claimed user $u$ is authenticated as the registered *user u.* The algorithmic procedure for authenticating the user $u$ by means of sketch $s$ using threshold $\theta$ is summarized in Algorithm 3. In this example, the input sketch canvas and the reference sketch canvases have the same size (ie number of pixels) and format (ie array arrangement of the pixels). In other words, the input sketch canvas and the reference sketch canvases have a common array of picture elements. In this example the picture elements of the current input and reference sketches comprise a two-dimensional raster array of pixels, but it could be instead a three-dimensional array of voxels, or any other suitable two or three-dimensional arrangement of picture elements which enable a correspondence to be drawn between the individual picture elements of the input and reference sketches. If the input sketch is drawn on an input canvas having a different image resolution and/or aspect-ratio from the reference canvas, then a scaling and/or transformation operation may be performed in order to match the input canvas to the reference canvas before authentication is carried out.

| Algorithm 3: Authenticate (**u**, **s**, $\theta$) | |
|---|---|
| 1: | Retrieve $\boldsymbol{S_u} = \{\boldsymbol{s_{u1}}, ..., \boldsymbol{s_{uk}}\}$ and $(\bar{\boldsymbol{x}}_{\boldsymbol{u}}, \bar{\boldsymbol{y}}_{\boldsymbol{u}})$ of the claimed user |
| 2: | Translate input sketch s such that the centre coordinates $(\bar{x}_s, \bar{y}_s)$ of its bounding box superposes the centre coordinates $(\bar{x}_u, \bar{y}_u)$ of the stored sketches |
| 3: | $\boldsymbol{d(s, u)} = \boldsymbol{min}_{i=1,...,k}\boldsymbol{d(s,s_{ui})}$ |
| 4: | if $\boldsymbol{d(s,u)} < \theta$ then |
| 5: | Authenticate user u |
| 6: | end if |

The above algorithm may be modified so that one of the reference sketches can be selected as a representative sketch. The input sketch can then be compared to the selected representative reference sketch, and if the similarity measure is below a threshold when compared to the selected representative reference sketch, the user is positively authenticated. Alternatively, it is possible to generate a representative sketch from the reference sketches (eg the median sketch as outlined above). Then the current input sketch is compared with the generated representative reference sketch, and if the similarity measure is below a threshold when compared to the generated representative reference sketch, the user is positively authenticated. It is to be noted that the above similarity measure refers to dissimilarity, but it instead could measure a similarity metric instead. In that case, the user would be authenticated if the similarity is above a threshold.

The availability of a distance measure between pairs of sketches $s$ and $s'$ is a basic requirement for the user authentication framework described above. If feature vectors were used to characterise the sketches with $n$ numerical features, then the Euclidean distance or other (dis)similarity measures could be used for this task (eg the correlation coefficient or others). However, this kind of feature extraction process is computationally expensive and requires that all sketches in an authentication system be described by the same number of features regardless the size and/or the complexity of the actual sketch.

The present invention proposes a method which is based on formally representing a given sketch $s$ in the form of a string, rather than extracting some vectorial characterization from the sketch image. Strings are defined over an alphabet. An alphabet $A$ is a finite set of symbols. A string $w$ over an alphabet $A$, also called a word, is a sequence $w = w_1 ... w_n$ with $w_i \in A \; \forall i \in 1, ... n$. The length of the string $w = w_1 ... w_n$ is the number of its symbols, $|w| = n$. The empty string $\varepsilon$ is the string of length 0, ie $|\varepsilon| = 0$, and $A^*$ refers to the infinite set of all possible strings of arbitrary length that can be built using the alphabet A.

As mentioned above, the sketches in the present framework are technically defined by an ordered list of sample points, each representing a picture element of the sketch. In order to transform this list into a string, a member symbol $w_i$ of the alphabet $A$ is used to represent a 3-tupel $(x, y, t)$, with $x, y \in \{1,2, ..., N\}$ and $t \in \{0,1,2, ..., T_{max}\}$, where $N$ refers to the window size of the square canvas in pixels and $T_{max}$ is the maximum allowed capture time in ms. Hence, a sequence of $n$ ordered sample points $s = \{(x_1,y_1,t_1), (x_2,y_2,t_2), ..., (x_n,y_n,t_n)\}$ that represents a sketch can be directly interpreted as string $w = w_1 ... w_n$ where each symbol represents a location-time vector, namely $w_i = (x_i,y_i,t_i)$. This formalism is used from now on in this description. Assuming that $N = 200$ and $T_{max} = 5000$, for example, the basic alphabet A consists of $|A| = N^2 \cdot T_{max} = 200,000,000$ different symbols (3-tupels).

According to the present invention, it is proposed to use a string edit distance, also known as Levenshtein distance, to represent a dissimilarity $d(s,s')$ of two sketches $s$ and $s'$. The concept of string edit distance was developed to represent the distance, or dissimilarity, of two text strings, $s = s_1 ... s_n$ and $S = s'_1 ... s'_m$ over an alphabet $A$ of text symbols, by determining the minimum amount of distortion that is needed to transform $s$ into $s'$. Such a distortion model may comprise edit operations such as:

1. Substitution of a symbol a by b: $a \rightarrow b$; $a, b \in A$
2. Insertion of a symbol a: $\varepsilon \rightarrow a$; $a \in A$
3. Deletion of a symbol $a \rightarrow \varepsilon$; $a \in A$

It is to be noted that other edit operations, such as merging or splitting of individual symbols could also be integrated into this model.

A cost parameter can be assigned to each type of edit operation:

- Substitution cost: $c(a \rightarrow b)$
- Insertion cost: $c(\varepsilon \rightarrow a)$
- Deletion cost: $c(a \rightarrow \varepsilon)$

The stronger the distortion of an edit operation, the higher the corresponding cost. In the present example authentication method, a cost model for edit operations is used for sketch dissimilarity computation.

The substitution cost $c(a \rightarrow b)$, can be determined from the Euclidean distance between the sample points corresponding to the symbols $a$ and $b$. Alternatively, the Euclidean distance could be replaced by any Minkowski metric. Assuming that the symbol $a$ represents a sample point $(x, y, t)$ while the symbol $b$ refers to a sample point $(x', y', t')$. Then, the Euclidean distance between $a$ and $b$ is defined by

$$\|a - b\| = \sqrt{(x - x')^2 + (y - y')^2 + (t - t')^2}.$$

It is to be noted that it is possible to use a relative weight to trade the spatial against the temporal difference, or the temporal against the spatial difference of two sample points by means of a weighting parameter $\beta \in [0,1]$. That is, rather than taking the simple Euclidean distance, one could use a weighted version such as

$$\|a - b\|_\beta = \sqrt{\beta((x - x')^2 + (y - y')^2) + (1 - \beta)(t - t')^2}.$$

The substitution cost $c(a \to b)$ is then defined in the present framework by

$$c(a \to b) = \begin{cases} 0 \text{ if } \|a - b\|_\beta < \tau_1 \\ \left(\frac{\|a-b\|_\beta - \tau_1}{\tau_2 - \tau_1}\right)^p \times \xi \text{ else} \end{cases} \quad (1)$$

Both $\tau_1 > 0$ and $\tau_2 > 0$ are user-defined parameters that quantify the degree of error-tolerance in the similarity framework. The parameter $\xi > 0$ is the penalty cost (which is particularly useful for the definition of the insertion/deletion cost that follows below). Typically, one might use unit cost for the penalty $\xi$. Parameter $p$ refers to the degree of a polynomial function (eg $p = 3$).

The substitution cost is zero when the (weighted) Euclidean distance is below a predetermined (eg application specific) threshold $\tau_1$. This allows a tolerance to subtle errors that might occur between two sketches. When the distance $\|a - b\|_\beta$ lip is greater than $\tau_1$, the corresponding cost is a polynomial function of the Euclidean distance with degree $p$. The factor ($\tau_2 - \tau_1$) normalises the resulting cost to lie between zero (when $\|a - b\|_\beta$ is equal to $\tau_1$) and the user-defined penalty cost $\xi$ (when $\|a - b\|_\beta$ is equal to $\tau_2$). This particular normalisation guarantees that the substitution cost is lower than (or equal to) the penalty cost $\xi$ as long as the underlying sample points offer a dissimilarity which is smaller than $\tau_2$. However, when the distance $\|a - b\|_\beta$ becomes greater than the second threshold $\tau_2$, the corresponding substitution cost grows boundlessly. That is, the resulting cost lies in the interval $\xi, \infty$. Figure 2 illustrates this particular substitution cost model. The substitution cost $c(a \to b)$ shown in Figure 2 is obtained from the (weighted) Euclidean distance $\|a - b\|$ between two sample points represented by symbols $a$ and b using the function of Equation 1.

Typically in standard implementations of string edit distance, a constant cost is used for both insertion and deletion, for example:

$$c(\varepsilon \to a) = c(a \to \varepsilon) = \xi \forall a \in A,$$

where $\xi$ refers to the same positive constant as used in Equation 1. It is to be noted, however, that during the computation of the string edit distance, the symbols of both strings are linearly processed from left to right. That is, at each step of the computation, the two symbols $a$ and $b$ are to be processed from both strings in the next step. Hence, it is possible to define the following cost model for deletions and insertions of individual symbols (for this particular definition, it is assumed that the two symbols $a$ and $b$ from the respective strings are the next to be processed).

$$c(\varepsilon \to b) = c(a \to \varepsilon) = \begin{cases} \xi/2 \text{ if } \|a - b\|_\beta < \tau_2 \\ \left(\frac{\|a-b\|_\beta - \tau_1}{\tau_2 - \tau_1}\right)^p \times \xi/2 \text{ else} \end{cases} \quad (2)$$

Thus, whenever the current two symbols are similar enough ($\|a - b\|_\beta < \tau_2$), the deletion of $a$ or the insertion of symbol $b$ can be accomplished at a constant cost of $\xi/2$. This definition guarantees that the processing of two symbols $a$ and $b$ with $\|a - b\|_\beta < \tau_2$ costs less than, or is equal to, the penalty cost $\xi$ in any case (either due to the substitution cost $c(a \to b)$ or due to the sum of deletion/insertion costs $c(a \to \varepsilon) + c(\varepsilon \to b)$).

Yet, if the dissimilarity of the two current symbols $a$ and $b$ is greater than the second threshold $\tau_2$, the deletion/insertion edit is penalised with a cost that depends on the Euclidean distance of the respective symbols. This specific cost model may strongly penalise the processing of two very dissimilar symbols. It is to be noted that this would not be the case if a constant cost $\xi$ is used for both insertion and deletion. Formally, a substitution ($a \to b$) with a very high cost (higher than $2 \times \xi$) could then always be replaced by a deletion of the symbol $a$ (with cost $\xi$) and the subsequent insertion of the symbol $b$ (also with cost $\xi$). In other words, without the definition of the cost model of Equation 2, the maximum cost of processing two symbols would be $2 \times \xi$.

The cost of a sequence of edit operations $S = e_1, ..., e_t$ is defined as the sum of the cost of all of these edit operations. Formally,

$$c(S) = \sum_{i=1}^{t} c(e_i).$$

The edit distance of two strings $s, s' \in A^*$ may be defined as $d(s, s') = mín\{c(S)|S$ is sequence of edit operations that transform $s$ into $s'\}$.

A sequence $S = e_1, ..., e_t$ of edit operations that completely transform a string $s$ into another string $s'$ is also referred to as edit path. If $s$ and $s'$ are identical, no edit operation is needed and the edit distance is zero. Conversely, if $s$ and $s'$ are very dissimilar, a large number of (high cost) edit operations are needed, which results in a high cost. Hence, in this case, the edit distance will be large.

The edit distance can be computed in a brute force way by enumerating all potential sequences of edit operations, computing their cost, and selecting the one(s) with minimum cost. However, this results in an algorithm of exponential time complexity. In the following, a more efficient way is considered which uses dynamic programming techniques. It has a time and space complexity of only $0(nm)$, where $n$ and $m$ are the number of symbols in the strings under consideration. Dynamic programming is a method for solving a complex problem by breaking it down into a set of simpler sub-problems, solving each of those sub-problems just once, and storing their solutions, for example using a memory-based data structure. The next time the same sub-problem occurs, instead of recomputing its solution, the previously computed solution is simply looked at, thereby saving computation time at the expense of a modest expenditure in storage space. Each of the sub-problem solutions may be indexed in some way, typically based on the values of its input parameters, so as to facilitate its lookup.

Algorithm 4 gives the basic procedure for edit distance computation. The example algorithm takes two strings $x = x_1 x_2 ... x_n$ and $y = y_1 y_2 ... y_m$ as input.

| Algorithm 4: Edit-Distance (**x,y**) |  |
|---|---|
| 1: | $|\boldsymbol{x}| = \boldsymbol{n}$, $|\boldsymbol{y}| = \boldsymbol{m}$ |
| 2: | Let $\boldsymbol{D}[\boldsymbol{0}..\boldsymbol{n},\boldsymbol{0}..\boldsymbol{m}]$ be a new empty matrix |
| 3: | $\boldsymbol{D}[\boldsymbol{0},\boldsymbol{0}] = \boldsymbol{0}$ |
| 4: | for $\boldsymbol{i} = \boldsymbol{1}, ..., \boldsymbol{n}$ do |
| 5: | $\boldsymbol{D}[\boldsymbol{i},\boldsymbol{0}] = \boldsymbol{D}[\boldsymbol{i} - \boldsymbol{1},\boldsymbol{0}] + \boldsymbol{c}(\boldsymbol{x_i} \rightarrow \varepsilon)$ |
| 6: | end for |
| 7: | for $\boldsymbol{j} = \boldsymbol{1}, ..., \boldsymbol{m}$ do |
| 8: | $\boldsymbol{D}[\boldsymbol{0},\boldsymbol{j}] = \boldsymbol{D}[\boldsymbol{0},\boldsymbol{j} - \boldsymbol{1}] + \boldsymbol{c}(\varepsilon \rightarrow \boldsymbol{y_j})$ |
| 9: | end for |
| 10: | for $\boldsymbol{i} = \boldsymbol{1}, ..., \boldsymbol{n}$ do |
| 11: | for $\boldsymbol{j} = \boldsymbol{1}, ..., \boldsymbol{m}$ do |
| 12: | $\boldsymbol{m_1} = \boldsymbol{D}[\boldsymbol{i} - \boldsymbol{1},\boldsymbol{j} - \boldsymbol{1}] + \boldsymbol{c}(\boldsymbol{x_i} \rightarrow \boldsymbol{y_i})$ |
| 13: | $\boldsymbol{m_2} = \boldsymbol{D}[\boldsymbol{i} - \boldsymbol{1},\boldsymbol{j}] + \boldsymbol{c}(\boldsymbol{x_i} \rightarrow \varepsilon)$ |
| 14: | $\boldsymbol{m_3} = \boldsymbol{D}[\boldsymbol{i},\boldsymbol{j} - \boldsymbol{1}] + \boldsymbol{c}(\varepsilon \rightarrow \boldsymbol{y_i})$ |
| 15: | $\boldsymbol{D}[\boldsymbol{i},\boldsymbol{j}] = \boldsymbol{min}(\boldsymbol{m_1},\boldsymbol{m_2},\boldsymbol{m_3})$ |
| 16: | end for |
| 17: | end for |

The computation of $d(x,y)$ is based on an $(n + 1) \times (m + 1)$ cost matrix $D[i,j]$, where $i = 0,1, ..., n; j = 0,1, ..., m$. Matrix element $D[i,j]$ contains $d(x_1 ... x_i, y_1 ... y_j)$ and *thus* $D[n,m]$ contains $d(x_1 ... x_n, y_1 ... y_m)$.

In row 3 the entry $D[0,0]$ is set to zero. Then in rows 4 to 6, column zero of $D$ is filled. The value $D[i, 0]$ corresponds to the sum of $D[i - 1,0]$ and the cost of deleting the symbol $x_i$ (vertical movements refer to deletions of symbols in $x$). Thus, in $D[n, 0]$ we have the cost of deleting the complete string $x$. In rows 7 to 9, row zero *of D* is filled. The value $D[0,j]$ corresponds to the sum of $D[0,j - 1]$ and the cost of inserting symbol $y_i$ (horizontal movements refer to insertions of symbols in $y$). Thus, in $D[0,m]$ we have the cost of inserting the complete string $y$.

The rest of the matrix is defined via two for loops. The two indices $i$ and $j$ control which symbols $x_i$ and $y_j$ of the strings $x = x_1 x_2 ... x_n$ and $y = y_1 y_2 \cdots y_m$ are currently processed. For each entry $D[i, j]$ it is defined how the two symbols $x_i$ and $y_y$ should be edited.

- $m_1$ (substitution): In this case both symbols $x_i$ and $y_j$ are processed by substituting $x_i$ with $y_j (x_i \rightarrow y_j)$. The predecessor

for this operation is in $D[i - 1, j - 1]$.

- $m_2$ (deletion): In this case symbol $x_i$ is processed by a deletion ($x_i \rightarrow \varepsilon$).

The predecessor for this operation is in $D[i - 1, j]$.

- $m_2$ (insertion): In this case symbol $y_j$ is processed by an insertion ($\varepsilon \rightarrow y_j$). The predecessor for this operation is in $D[i, j - 1]$.

The operation actually carried out is the one that minimises the partial edit distance $d(x_1 \ldots x_i, y_1 \ldots y_j)$ (rows 12 to 15).

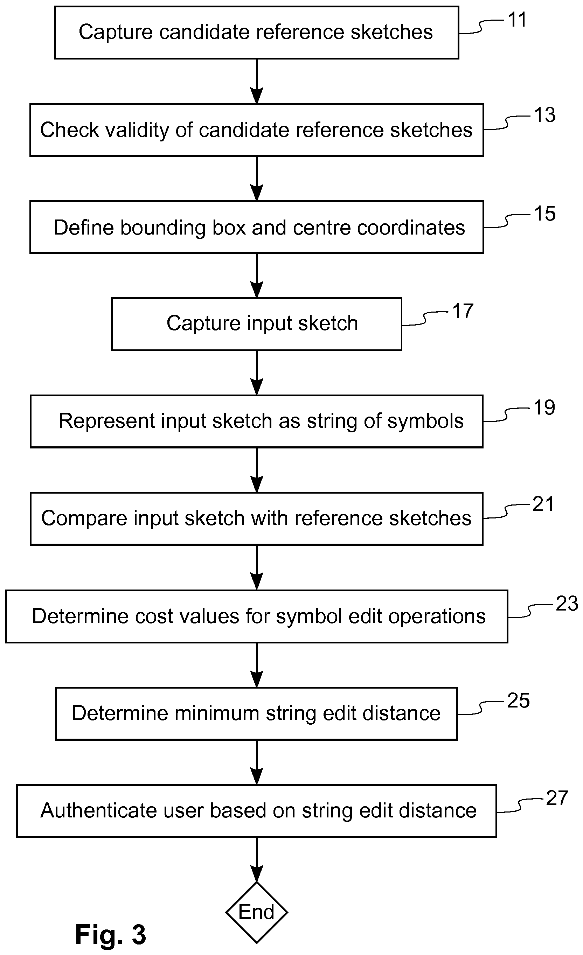

The flow chart of Figure 3 summarises the above example authentication method. In step 11 candidate reference sketches are captured. These are saved in a memory, which can for example be part of the apparatus comprising the capturing canvas 1. In step 13 the validity of the captured candidate sketches is verified. If one or more of the captured sketches are not valid, the user is requested to enter one or more candidate sketches so that a required number of reference sketches have been successfully captured. In step 15 the bounding box and centre coordinates are defined for the captured reference sketches. In step 17 an input sketch is captured. In this step the bounding box and centre coordinates are defined for the captured input sketch. In step 19, the input sketch is represented as a string of symbols. In other words the input sketch is represented as a "sentence" comprising a string of symbols. In step 21 the captured input sketch is compared with the reference sketches. This step may also comprise normalising the input sketch, for example by placing the captured input sketch over the reference sketches so that the centre coordinates of the input sketch coincide with the centre coordinates of the bounding box of the reference sketches. In step 23, cost values for string edit operations are determined. Based on the cost values, the minimum string edit distance is determined in step 25. In step 27, based on the minimum string edit distance, it is determined whether or not the user can be positively authenticated.

The above described authentication method may be modified in various ways as explained below.

Normalisation: it was proposed above to translate the centre point of the input sketch to the centre point of the bounding box of all sketches of the claimed user. As such, no other normalisation, such as scaling or re-orientation was applied to the input sketch. The advantage of not normalising the sketch is that the scaling, the orientation and/or the exact position can then be explicitly exploited for dissimilarity computation in the authentication phase, thereby increasing the overall security level of the authentication system. On the other hand, normalisation may be useful, for example if the usability of a certain authentication system turns out to be too low (for instance, when it is too difficult for a user to authenticate himself). In such a case, standard normalisation algorithms can be integrated into the present authentication method.

Regarding sketches as sets: in the example method described above, a sketch is formally represented as a string, and the string edit distance is applied for dissimilarity computation. A direct generalisation of this would be to use sets of sample points (strings) in a more direct manner, and define a dissimilarity measure between sets rather than between strings). This could be achieved, for instance, by solving a linear sum assignment problem defined over the two sets of sample points or by using set distance measures (eg the Hausdorff metric or similar).

In order to increase the usability and security of the system, optional steps may be included in the registration phase. In particular, automated warnings may be given to the user if he/she inputs a sketch which is too easy to guess and/or too complex for accurate reproduction during authentication. According to another variant, the median sketch $s_{um} \in S_u$ may be compared with a set $T$ ubiquitous sketches (eg $T$ instances of the most frequently input sketch subjects input by test persons during a secondary reference sketch acquisition phase). If the dissimilarity between $s_{um} \in S_u$ and any of the ubiquitous sketches is below $\theta$, the user may be warned that the input sketch subject is insufficiently distinctive, and the user may be asked to input a different sketch subject. According to another variant, the mean distance

$$\bar{d}_u = \sum_{\substack{i=1,\ldots,k-1 \\ j=i+1,\ldots,k}} d(s_{ui}, s_{uj})$$

may be computed among all pairs of the reference sketches $(s_{ui}, s_{uj}) \in S_u \times S_u$. A mean value $\bar{d}_u$ near to the threshold $\theta$ might indicate that user u has defined a sketch that is too difficult or complex for accurate productions, and the user may be warned accordingly.

According to another variant, the quality of the stored reference sketches may be improved by updating the stored set. Whenever a user is authenticated, an additional sketch becomes available. Hence, the three lines of Algorithm 5 would be added to Algorithm 3 whenever a user generates a positive match with sketch $s$. First, the input sketch $s$ of the user u that leads to the positive authentication is added to the current reference set $S_u$. Next, the most marginal sketch $s_{ur}$ of the user $u$ (also referred to as an outlier sketch) is computed by

$$r = arg \max_{s_{ui} \in S_u} \sum_{\substack{s_{ui} \in S_u \\ i \neq j}} d(s_{ui}, s_{uj}).$$

The marginal (outlier) sketch is the sketch whose sum of distances to all other reference sketches in $S_u$ is a maximum. This particular sketch, which can be interpreted as a weak representative for $S_u$, may be removed from $S_u$.

| Algorithm 5: Extension to Algorithm 3 | |
|---|---|
| 1: | $S_u = S_u \cup s$ |
| 2: | Compute marginal sketch $s_{ur}$ from $S_u$ |
| 3: | $S_u = S_u \setminus s_{ur}$ |

According to another variant, the method may comprise further validity checks. The described check for validity is based on the distances of the candidate sketches from the median sketch of the user. It is to be noted that other algorithmic procedures for checking the validity of candidate reference sketches based on their pairwise dissimilarities are possible (eg by ensuring that the variance of pairwise dissimilarities is below a certain threshold or similar).

In another variant of the user registration process, instead of the user drawing user-defined sketches, the system may prompt the user to draw a sketch whose shape is given by the system. According to this variant, different users would be distinguished not by the shape of the sketch, but by the manner in which the sketch is drawn by each user. In this case, the time parameter and/or the order of the different strokes may be the distinguishing factor between different users. In a further variant of the invention, once the user has entered his/her username, the system then displays to the user the shape of the sketch corresponding to the particular user. In this manner, the user is not obliged to remember the shape of the sketch, but simply needs to be able to reproduce the displayed sketch in the same manner in which the sketch was drawn when the reference sketch(es) were registered.

While the invention has been illustrated and described in detail in the drawings and foregoing description, such illustration and description are to be considered illustrative or exemplary and not restrictive, the invention being not limited to the disclosed embodiment. Other embodiments and variants are understood, and can be achieved by those skilled in the art when carrying out the claimed invention, based on a study of the drawings, the disclosure and the appended claims.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

**Claims**

1. Method of authenticating a user, the method comprising automatically determining a measure of similarity or dissimilarity between a drawing input by the user and at least one reference drawing ($s_{uj}$) previously input by the user, the input drawing being arranged to be compared picture element by picture element with the or each reference drawing ($s_{uj}$), a picture element being a pixel or a voxel, the input drawing comprising a first plurality of picture elements (5), and the reference drawing comprising a second plurality of picture elements, the method being **characterised by**:

   obtaining at least one user drawn candidate reference drawing and verifying that the at least one candidate reference drawing meets a predetermined quality criterion for use as the at least one reference drawing;
   for each of the first and second plurality of picture elements (5), determining (19) location and temporal coordinates of the said each picture element, the location coordinates of a respective picture element being the coordinates of that picture element in a canvas, the temporal coordinate comprising the time at which the respective picture element (5) of the respective drawing was drawn, relative to the time at which the user started drawing the respective drawing, the location and temporal coordinates of a picture element being referred to hereinafter as a symbol, the symbols of the first plurality of picture elements being referred to hereinafter as an input sentence, and the symbols of the second plurality of picture elements being referred to hereinafter as a reference sentence;

determining a measure of similarity or dissimilarity between the input sentence and the at least one reference sentence without generating feature vectors from the input sentence, wherein the determination of the measure of similarity or dissimilarity comprises determining (23) cost values for edit operations applied to the symbols of the input sentence symbol by symbol for transforming the input sentence into the respective reference sentence, and determining (25) a minimum edit distance between the symbols of the input sentence of the input drawing ($s_{uj}$) and the symbols of the reference sentence of the at least one reference drawing, wherein the minimum edit distance is the edit distance of the sequence of edit operations which transforms the input sentence of the input drawing into the reference sentence of one of the reference drawings with minimum cost; and positively authenticating the user if the minimum edit distance is below a given threshold.

2. Method according to claim 1, wherein determining the minimum edit distance between the symbols of the input sentence of the input drawing ($s_{uj}$) and the symbols of the reference sentence of the at least one reference drawing comprises determining (23) which of a plurality of possible sequences of edit operations for transforming the input sentence into the respective reference sentence has a lowest total cost value, whereby the edit operations include one or more symbol substitutions, one or more symbol insertions and/or one or more symbol deletions, and whereby each type of edit operation has a predetermined associated cost value.

3. Method according to claim 2, wherein the cost value of each edit operations is based on a weighted distance between the input symbol being transformed by the edit operation, and the reference symbol into which the input symbol is transformed by the edit operation.

4. Method according to claim 3, wherein the location coordinates are weighted with a first weighting parameter, and the time coordinates are weighted with a second weighting parameter, different from the first weighting parameter.

5. Method according to any one of claims 2 to 4, wherein the cost value for the symbol substitution is determined according to the following equation applying to pixels:

$$c(a \to b) = \begin{cases} 0 \text{ if} \|a - b\|_\beta < \tau_1 \\ \left(\dfrac{\|a - b\|_\beta - \tau_1}{\tau_2 - \tau_1}\right)^p \times \xi \text{ else} \end{cases},$$

where $\|a - b\|_\beta = \sqrt{\beta((x - x')^2 + (y - y')^2) + (1 - \beta)(t - t')^2}$, where $a$ is a symbol of the input drawing, $b$ is a symbol of the reference drawing ($s_{uj}$), $\beta$ is a weighting parameter such that $\beta \in [0,1]$, $x$ is a first location coordinate of $a$, $y$ is a second location coordinate of $a$, $x'$ is a first location coordinate of $b$, $y'$ is a second location coordinate of $b$, $t$ is a time coordinate of the location coordinates $x$ and $y$, $t'$ is a time coordinate of the location coordinates $x'$ and $y'$, $\tau_1$ is a first error tolerance parameter, $\tau_2$ is a second error tolerance parameter, $\xi$ is a penalty cost parameter, and $p$ is the degree of a polynomial function of the substitution cost $c(a \to b)$.

6. Method according to any one of claims 2 to 4, wherein the cost values for the symbol insertion and deletion are determined according to the following equation applying to pixels:

$$c(\varepsilon \to b) = c(a \to \varepsilon) = \begin{cases} \xi/2 \text{ if } \|a - b\|_\beta < \tau_2 \\ \left(\dfrac{\|a-b\|_\beta - \tau_1}{\tau_2 - \tau_1}\right)^p \times \xi/2 \text{ else} \end{cases}$$

where $\|a - b\|_\beta = \sqrt{\beta((x - x')^2 + (y - y')^2) + (1 - \beta)(t - t')^2}$, where $a$ is a symbol of the input drawing, $b$ is a symbol of a reference drawing ($s_{uj}$), $\beta$ is a weighting parameter such that $\beta \in [0,1]$, $x$ is a first location coordinate of $a$, $y$ is a second location coordinate of $a$, $x'$ is a first location coordinate of $b$, $y'$ is a second location coordinate of $b$, $t$ is a time coordinate of the location coordinates $x$ and $y$, $t'$ is a time coordinate of the location coordinates $x'$ and $y'$, $\tau_1$ is a first error tolerance parameter, $\tau_2$ is a second error tolerance parameter, $\xi$ is a penalty

cost parameter, $\varepsilon$ represents a string of symbols of length 0, and $p$ is the degree of a polynomial function of $c(\varepsilon \to b)$ or $c(a \to \varepsilon)$.

7. Method according to one of the preceding claims, wherein the minimum edit distance is the edit distance $min(c(S))$, where $c(S) = \sum_{i=1}^{t} c(e_i)$, where $S$ is the sequence of all the edit operations $e_1, ..., e_t$ and c is the cost, and wherein $min(c(S))$ is obtained by dynamic programming by breaking $min(c(S))$ into sub-problems, solving each of those sub-problems once, and storing their solutions to solve $min(c(S))$.

8. Method of authenticating a user according to any one of the preceding claims, wherein the authenticating comprises:

   comparing the input drawing to all of the reference drawings ($s_{uj}$) and positively authenticating the user if the minimum edit distance between the input drawing and any of the reference drawings ($s_{uj}$) is below the given threshold; or
   selecting one of the reference drawings as a representative reference drawing, comparing the input drawing to the selected representative reference drawing ($s_{uj}$), and positively authenticating the user if the minimum edit distance between the input drawing and the selected representative reference drawings is below the given threshold; or
   generating a representative drawing from the reference drawings, comparing the input drawing to the generated representative reference drawing, and positively authenticating the user if the minimum edit distance between the input drawing and the generated representative reference drawings is below the given threshold.

9. Method of authenticating a user according to claim 8, wherein the or each reference drawing is input by the user in a registration process, and wherein the registration process comprises warning the user if the or each reference drawing is too easy to guess and/or warning the user if the or each reference drawing is too complex to be reproduced by the user in the authentication process.

10. Method of authenticating a user according to any one of claims 8 to 9, wherein the or each reference drawing is input by the user in a registration process and saved in a memory, the method further comprising:

   selecting the reference drawing, referred to as an outlier reference drawing, which has the maximum edit distance to the other reference drawings; and
   replacing in the memory the outlier reference drawing with the input drawing.

11. Apparatus for authenticating a user by determining a measure of similarity or dissimilarity between a drawing input by the user and at least one reference drawing ($s_{uj}$) previously input by the user, the input drawing being arranged to be compared, picture element by picture element, with the or each reference drawing, a picture element being a pixel or a voxel, the input drawing comprising a first plurality of the picture elements (5), the or each reference drawing comprising a second plurality of the picture elements, the apparatus being **characterised by**:

   means for obtaining at least one user drawn candidate reference drawing and verifying that the at least one candidate reference drawing meets a predetermined quality criterion for use as the at least one reference drawing;
   means for determining, for each of the first and second plurality of picture elements (5), location and temporal coordinates of the said each picture element (5), the location coordinates of a respective picture element being the coordinates of that picture element in a canvas, the temporal coordinate comprising the time at which the respective picture element (5) of the respective drawing was drawn, relative to the time at which the user started drawing the respective drawing, the location and temporal coordinates of a picture element being referred to hereinafter as a symbol, the symbols of the first plurality of picture elements being referred to hereinafter as an input sentence, and the symbols of the second plurality of picture elements being referred to hereinafter as a reference sentence;
   means for determining a measure of similarity or dissimilarity between the input sentence and the at least reference sentence without generating feature vectors from the input sentence, wherein the means for determining the measure of similarity or dissimilarity comprise means for determining cost values for edit operations applied to the symbols of the input sentence symbol by symbol for transforming the input sentence into the respective reference sentence, and means for determining a minimum edit distance between the symbols of the input sentence of the input drawing and the symbols of the reference sentence of the at least one reference

drawing ($s_{uj}$), wherein the minimum edit distance is the edit distance of the sequence of edit operations which transforms the input sentence of the input drawing into the reference sentence of one of the reference drawings with minimum cost; and

means for positively authenticating the user if the minimum edit distance is below a given threshold.

**Patentansprüche**

1. Verfahren zum Authentifizieren eines Benutzers, das Verfahren umfassend das automatische Ermitteln eines Ähnlichkeits- oder Unähnlichkeitsmaßes zwischen einer Zeichnung, die von dem Benutzer eingegeben wurde, und mindestens einer Referenzzeichnung ($s_{uj}$), die vorher von dem Benutzer eingegeben wurde, wobei die eingegebene Zeichnung angeordnet ist, um Bildelement für Bildelement mit der oder jeder Referenzzeichnung ($s_{uj}$) verglichen zu werden, ein Bildelement ein Pixel oder ein Voxel ist, die eingegebene Zeichnung eine erste Vielzahl von Bildelementen (5) umfasst, und die Referenzzeichnung eine zweite Vielzahl von Bildelementen umfasst, wobei das Verfahren **gekennzeichnet ist durch**:

   das Erhalten von mindestens einer von dem Benutzer gezeichneten Kandidaten-Referenzzeichnung und das Überprüfen, dass die mindestens eine Kandidaten-Referenzzeichnung zur Verwendung als die mindestens eine Referenzzeichnung ein vorbestimmtes Qualitätskriterium erfüllt;

   für jede der ersten und der zweiten Vielzahl von Bildelementen (5) das Bestimmen (19) von Standort- und zeitlichen Koordinaten jedes der Bildelemente, wobei die Ortskoordinaten eines jeweiligen Bildelements die Koordinaten des Bildelements in einem Zeichenbereich sind, die zeitlichen Koordinaten die Zeit, zu der das jeweilige Bildelement (5) der jeweiligen Zeichnung gezeichnet wurde, relativ zu der Zeit, zu der der Benutzer das Zeichnen der jeweiligen Zeichnung begonnen hat, umfasst, die Orts- und zeitlichen Koordinaten eines Bildelements im Folgenden als Symbol bezeichnet werden, die Symbole der ersten Vielzahl von Bildelementen im Folgenden als Eingabesatz bezeichnet werden und die Symbole der zweiten Vielzahl von Bildelementen im Folgenden als Referenzsatz bezeichnet werden;

   das Ermitteln eines Ähnlichkeits- oder Unähnlichkeitsmaßes zwischen dem Eingabesatz und dem mindestens einen Referenzsatz, ohne Merkmalsvektoren aus dem Eingabesatz zu erzeugen, wobei die Ermittlung des Ähnlichkeits- oder Unähnlichkeitsmaßes das Ermitteln (23) von Kostenwerten für Bearbeitungsoperationen umfasst, die zum Umwandeln des Eingabesatzes in den jeweiligen Referenzsatz Symbol für Symbol auf die Symbole des Eingabesatzes angewendet werden, und das Ermitteln (25) eines Mindestbearbeitungsabstands zwischen den Symbolen des Eingabesatzes der eingegebenen Zeichnung ($s_{uj}$) und den Symbolen des Referenzsatzes der mindestens einen Referenzzeichnung, wobei der Mindestbearbeitungsabstand der Bearbeitungsabstand der Folge von Bearbeitungsoperationen ist, der den Eingabesatz der eingegebenen Zeichnung in den Referenzsatz der einen der Referenzzeichnungen mit minimalen Kosten umwandelt; und

   das positive Authentifizieren des Benutzers, wenn der Mindestbearbeitungsabstand unter einem gegebenen Schwellenwert liegt.

2. Verfahren nach Anspruch 1, wobei das Ermitteln des Mindestbearbeitungsabstands zwischen den Symbolen des Eingabesatzes der eingegebenen Zeichnung ($s_{uj}$) und den Symbolen des Referenzsatzes der mindestens einen Referenzzeichnung das Ermitteln (23) umfasst, welche aus einer Vielzahl möglicher Folgen von Bearbeitungsoperationen zum Umwandeln des Eingabesatzes in den jeweiligen Referenzsatz den niedrigsten Gesamtkostenwert aufweist, wobei die Bearbeitungsoperationen eine oder mehrere Symbolersetzungen, eine oder mehrere Symboleinfügungen und/oder eine oder mehrere Symbollöschungen beinhalten und wobei jede Art von Bearbeitungsoperation einen vorbestimmten zugeordneten Kostenwert aufweist.

3. Verfahren nach Anspruch 2, wobei der Kostenwert jeder Bearbeitungsoperation auf einem gewichteten Abstand zwischen dem Eingabesymbol, das durch die Bearbeitungsoperation umgewandelt wird, und dem Referenzsymbol, in welches das Eingabesymbol durch die Bearbeitungsoperation umgewandelt wird, basiert.

4. Verfahren nach Anspruch 3, wobei die Ortskoordinaten mit einem ersten Gewichtungsparameter gewichtet werden und die zeitlichen Koordinaten mit einem zweiten Gewichtungsparameter gewichtet werden, der sich von dem ersten Gewichtungsparameter unterscheidet.

5. Verfahren nach einem der Ansprüche 2 bis 4, wobei die Kostenwerte für die Symbolersetzung gemäß der folgenden Gleichung ermittelt wird, die für Pixel gilt:

$$c(a \rightarrow b) = \begin{cases} 0 \text{ wenn } \|a - b\|_\beta < \tau_1 \\ \left(\frac{\|a-b\|_\beta - \tau_1}{\tau_2 - \tau_1}\right)^p \times \xi \text{ sonst} \end{cases},$$

wobei $\|a - b\|_\beta = \sqrt{\beta((x - x')^2 + (y - y')^2) + (1 - \beta)(t - t')^2}$, wobei *a* ein Symbol der Eingabezeichnung ist, *b* ein Symbol einer Referenzzeichnung ($s_{uj}$) ist, $\beta$ ein Gewichtungsparameter ist, sodass $\beta \in [0,1]$, *x* eine erste Ortskoordinate von *a* ist, *y* eine zweite Ortskoordinate von *a* ist, *x'* eine erste Ortskoordinate von *b* ist, *y'* eine zweite Ortskoordinate von *b* ist, *t* eine Zeitkoordinate der Ortskoordinaten *x* und *y* ist, *t'* eine Zeitkoordinate der Ortskoordinaten *x'* und *y'* ist, $\tau_1$ ein erster Fehlertoleranzparameter ist, $\tau_2$ ein zweiter Fehlertoleranzparameter ist, $\xi$ ein Strafkostenparameter ist, und *p* der Grad einer Polynomfunktion von Symbolersetzungskosten $c(a \rightarrow b)$ ist.

6. Verfahren nach einem der Ansprüche 2 bis 4, wobei die Kostenwerte für die Symboleinfügung und -löschung gemäß der folgenden Gleichung ermittelt wird, die für Pixel gilt:

$$c(\varepsilon \rightarrow b) = c(a \rightarrow \varepsilon) = \begin{cases} \xi/2 \text{ wenn } \|a - b\|_\beta < \tau_2 \\ \left(\frac{\|a-b\|_\beta - \tau_1}{\tau_2 - \tau_1}\right)^p \times \xi/2 \text{ sonst} \end{cases}$$

wobei $\|a - b\|_\beta = \sqrt{\beta((x - x')^2 + (y - y')^2) + (1 - \beta)(t - t')^2}$, wobei *a* ein Symbol der Eingabezeichnung ist, *b* ein Symbol einer Referenzzeichnung ($s_{uj}$) ist, $\beta$ ein Gewichtungsparameter ist, sodass $\beta \in [0,1]$, *x* eine erste Ortskoordinate von *a* ist, *y* eine zweite Ortskoordinate von *a* ist, *x'* eine erste Ortskoordinate von *b* ist, *y'* eine zweite Ortskoordinate von *b* ist, *t* eine Zeitkoordinate der Ortskoordinaten *x* und y ist, *t'* eine Zeitkoordinate der Ortskoordinaten *x'* und *y'* ist, $\tau_1$ ein erster Fehlertoleranzparameter ist, $\tau_2$ ein zweiter Fehlertoleranzparameter ist, $\xi$ ein Strafkostenparameter ist, $\varepsilon$ eine Kette von Symbolen der Länge 0 darstellt und *p* der Grad einer Polynomfunktion von $c(\varepsilon \rightarrow b)$ oder $c(a \rightarrow \varepsilon)$ ist.

7. Verfahren nach einem der vorhergehenden Ansprüche, wobei der Mindestbearbeitungsabstand der Bearbeitungsabstand $min(c(S))$ ist, wobei $c(S) = \sum_{i=1}^{t} c(e_i)$, wobei *S* die Abfolge aller Bearbeitungsoperationen $e_1, ..., e_t$ ist und *c* die Kosten sind, und wobei $min(c(S))$ durch dynamisches Programmieren durch Brechen $min(c(S))$ in Unterprobleme, einmaliges Lösen jedes dieser Unterprobleme und Speichern von deren Lösungen $min(c(S))$ erhalten wird.

8. Verfahren zum Authentifizieren eines Benutzers nach einem der vorhergehenden Ansprüche, wobei das Authentifizieren umfasst:

   Vergleichen der eingegebenen Zeichnung mit allen Referenzzeichnungen ($s_{uj}$) und positives Authentifizieren des Benutzers, wenn der Mindestbearbeitungsabstand zwischen der eingegebenen Zeichnung und einer beliebigen der Referenzzeichnungen ($s_{uj}$) unter dem gegebenen Schwellenwert liegt; oder
   Auswählen einer der Referenzzeichnungen als repräsentative Referenzzeichnung, Vergleichen der eingegebenen Zeichnung mit der ausgewählten repräsentativen Referenzzeichnung ($s_{uj}$) und positives Authentifizieren des Benutzers, wenn der Mindestbearbeitungsabstand zwischen der eingegebenen Zeichnung und den ausgewählten repräsentativen Referenzzeichnungen unter dem gegebenen Schwellenwert liegt; oder
   Erzeugen einer repräsentativen Referenzzeichnung aus den Referenzzeichnungen, Vergleichen der eingegebenen Zeichnung mit der erzeugten repräsentativen Referenzzeichnung und positives Authentifizieren des Benutzers, wenn der Mindestbearbeitungsabstand zwischen der eingegebenen Zeichnung und den erzeugten repräsentativen Referenzzeichnungen unter dem gegebenen Schwellenwert liegt.

9. Verfahren zum Authentifizieren eines Benutzers nach Anspruch 8, wobei die oder jede Referenzzeichnung von dem Benutzer in einem Registrierungsprozess eingegeben wird und wobei der Registrierungsprozess das Warnen des Benutzers umfasst, falls die oder jede Referenzzeichnung zu leicht zu erraten ist und/oder Warnen des Benutzers, falls die oder jede Referenzzeichnung zu komplex ist, um von dem Benutzer in dem Authentifizierungsprozess reproduziert zu werden.

**10.** Verfahren zum Authentifizieren eines Benutzers nach einem der Ansprüche 8 bis 9, wobei die oder jede Referenzzeichnung von dem Benutzer in einem Registrierungsprozess eingegeben und in einem Speicher gespeichert wird, wobei das Verfahren ferner umfasst:

Auswählen der Referenzzeichnung, die als Ausreißer-Referenzzeichnung bezeichnet wird, die den maximalen Bearbeitungsabstand zu den anderen Referenzzeichnungen aufweist; und
Ersetzen der Ausreißer-Referenzzeichnung durch die eingegebene Zeichnung in dem Speicher.

**11.** Vorrichtung zum Authentifizieren eines Benutzers durch Ermitteln eines Ähnlichkeits- oder Unähnlichkeitsmaßes zwischen einer Zeichnung, die von dem Benutzer eingegeben wurde, und mindestens einer Referenzzeichnung ($s_{uj}$), die vorher von dem Benutzer eingegeben wurde, wobei die eingegebene Zeichnung angeordnet ist, um Bildelement für Bildelement mit der oder jeder Referenzzeichnung ($s_{uj}$) verglichen zu werden, ein Bildelement ein Pixel oder ein Voxel ist, die eingegebene Zeichnung eine erste Vielzahl von Bildelementen (5) umfasst, und die Referenzzeichnung eine zweite Vielzahl von Bildelementen umfasst, wobei die Vorrichtung **gekennzeichnet ist durch**:

Mittel zum Erhalten von mindestens einer von dem Benutzer gezeichneten Kandidaten-Referenzzeichnung und zum Überprüfen, dass die mindestens eine Kandidaten-Referenzzeichnung zur Verwendung als die mindestens eine Referenzzeichnung ein vorbestimmtes Qualitätskriterium erfüllt;
für jede der ersten und der zweiten Vielzahl von Bildelementen (5) Mittel zum Bestimmen (19) von Standort- und zeitlichen Koordinaten jedes der Bildelemente, wobei die Ortskoordinaten eines jeweiligen Bildelements die Koordinaten des Bildelements in einem Zeichenbereich sind, die zeitlichen Koordinaten die Zeit, zu der das jeweilige Bildelement (5) der jeweiligen Zeichnung gezeichnet wurde, relativ zu der Zeit, zu der der Benutzer das Zeichnen der jeweiligen Zeichnung begonnen hat, umfasst, die Orts- und zeitlichen Koordinaten eines Bildelements im Folgenden als Symbol bezeichnet werden, die Symbole der ersten Vielzahl von Bildelementen im Folgenden als Eingabesatz bezeichnet werden und die Symbole der zweiten Vielzahl von Bildelementen im Folgenden als Referenzsatz bezeichnet werden;
Mittel zum Ermitteln eines Ähnlichkeits- oder Unähnlichkeitsmaßes zwischen dem Eingabesatz und dem mindestens einen Referenzsatz, ohne Merkmalsvektoren aus dem Eingabesatz zu erzeugen, wobei die Mittel zum Ermitteln des Ähnlichkeits- oder Unähnlichkeitsmaßes Mittel zum Ermitteln (23) von Kostenwerten für Bearbeitungsoperationen umfasst, die zum Umwandeln des Eingabesatzes in den jeweiligen Referenzsatz Symbol für Symbol auf die Symbole des Eingabesatzes angewendet werden, und Mittel zum Ermitteln (25) eines Mindestbearbeitungsabstands zwischen den Symbolen des Eingabesatzes der eingegebenen Zeichnung ($s_{uj}$) und den Symbolen des Referenzsatzes der mindestens einen Referenzzeichnung, wobei der Mindestbearbeitungsabstand der Bearbeitungsabstand der Folge von Bearbeitungsoperationen ist, der den Eingabesatz der eingegebenen Zeichnung in den Referenzsatz der einen der Referenzzeichnungen mit minimalen Kosten umwandelt; und
Mittel zum positiven Authentifizieren des Benutzers, wenn der Mindestbearbeitungsabstand unter einem gegebenen Schwellenwert liegt.

**Revendications**

**1.** Un procédé pour authentifier un utilisateur, le procédé comprenant la détermination automatique d'une mesure de similarité ou de dissimilarité entre un dessin entré par l'utilisateur et au moins un dessin de référence ($s_{uj}$) entré préalablement par l'utilisateur, le dessin d'entrée étant conçu pour être comparé élément d'image par élément d'image avec le ou chaque dessin de référence ($s_{uj}$), l'élément d'image étant un pixel ou on voxel, le dessin d'entrée comprenant une première pluralité d'éléments d'image (5), et le dessin de référence comprenant une deuxième pluralité d'éléments d'image, le procédé étant **caractérisé en ce qu'**il comprend :

l'obtention d'au moins un dessin de référence candidat dessiné par l'utilisateur et la vérification que l'au moins un dessin de référence candidat satisfait à une critère de qualité pour être utilisé en tant que l'au moins un dessin de référence ;
pour chacun de la première et deuxième pluralité d'éléments d'image (5), la détermination (19) des coordonnées d'emplacement et temporelles dudit chaque élément d'image, les coordonnées d'emplacement d'un élément de dessin respectif étant les coordonnées de cet élément de dessin sur une toile, la coordonnée temporelle comprenant le moment auquel l'élément d'image respectif du dessin respective a été dessiné, par rapport au moment où l'utilisateur a commencé à dessiner le dessin respectif, les coordonnées d'emplacement et temporelles d'un élément d'image étant appelées ci-après un symbole, les symboles de la première pluralité d'éléments d'image étant appelés ci-après une phrase d'entrée, et les symboles de la deuxième pluralité d'éléments d'image étant appelés ci-après une phrase de référence,

la détermination d'une mesure de similarité ou de dissimilarité entre la phrase d'entrée et l'au moins une phrase de référence sans générer des vecteurs de caractéristique à partir de la phrase d'entrée, dans lequel la détermination de la mesure de similarité ou de dissimilarité comprend la détermination (23) des valeurs de coûts pour des opérations de modification appliquées aux symboles de la phrase d'entrée symbole par symbole pour transformer la phrase d'entrée en la phrase de référence respective, et la détermination (25) d'une distance de modification minimale entre les symboles de la phrase d'entrée du dessin d'entrée ($s_{uj}$) et les symboles de la phrase de référence de l'au moins un dessin de référence, dans lequel la distance de modification minimale est la distance de modification de la séquence d'opérations de modification qui transforme la phrase d'entrée du dessin d'entrée en la phrase de référence d'un des dessins de référence avec un coût minimal ; et l'authentification positive de l'utilisateur si la distance de modification minimale est inférieure à un seuil donné.

2. Le procédé selon la revendication 1, dans lequel la détermination d'une distance de modification minimale entre les symboles de la phrase d'entrée du dessin d'entrée (suj) et les symboles de la phrase de référence de l'au moins un dessin de référence comprend la détermination (23) quelle séquence entre la pluralité de séquences possibles d'opérations de modification pour transformer la phrase d'entrée en la phrase de référence respective a une valeur de coût total la plus basse, où les opérations de modification comprennent une ou plusieurs substitutions de symbole, une ou plusieurs insertions de symbole et/ou une ou plusieurs suppressions de symbole, et où chaque type d'opération de modification a une valeur de coût associée prédéterminée.

3. Le procédé selon la revendication 2, dans lequel la valeur de coût de chaque opération de modification est basée sur une distance pondérée entre le symbole d'entrée qui est transformé par l'opération de modification et le symbole de référence en lequel le symbole d'entrée est transformé par l'opération de modification.

4. Le procédé selon la revendication 3, dans lequel les coordonnées d'emplacement sont pondérées par un premier paramètre de pondération, et les coordonnées temporelles sont pondérées par un deuxième paramètre de pondération, différent du premier paramètre de pondération.

5. Le procédé selon l'une quelconque des revendications 2 à 4, dans lequel la valeur de coût pour la substitution de symbole est déterminée selon l'équation suivante appliquée aux pixels :

$$c(a \rightarrow b) = \begin{cases} 0 \text{ si} \|a - b\|_\beta < \tau_1 \\ \left(\dfrac{\|a - b\|_\beta - \tau_1}{\tau_2 - \tau_1}\right)^p \times \xi \text{ autrement} \end{cases},$$

où $\|a - b\|_\beta = \sqrt{\beta((x - x')^2 + (y - y')^2) + (1 - \beta)(t - t')^2}$, où $a$ est un symbole du dessin d'entrée, $b$ est un symbole du dessin de référence ($s_{uj}$), $\beta$ est un paramètre de pondération de manière que $\beta \in [0,1]$, $x$ est une première coordonnée d'emplacement d'$a$, $y$ est une deuxième coordonnée d'emplacement d'$a$, $x'$ est une première coordonnée d'emplacement de $b$, $y'$ est une deuxième coordonnée d'emplacement de $b$, $t$ est une coordonnée temporelle des coordonnées d'emplacement $x$ et $y$, $t'$ est une coordonnée temporelle des coordonnées d'emplacement $x'$ et $y'$, $\tau_1$ est un premier paramètre de tolérance d'erreur, $\tau_2$ est un deuxième paramètre de tolérance d'erreur, $\xi$ est un paramètre de coût de pénalité, et $p$ est le degré d'une fonction polynomiale du coût de substitution $c(a \rightarrow b)$.

6. Le procédé selon l'une quelconque des revendications 2 à 4, dans lequel les valeurs de coût pour l'insertion de symbole et la suppression de symbole sont déterminées selon l'équation suivante appliquée aux pixels :

$$c(\varepsilon \rightarrow b) = c(a \rightarrow \varepsilon) = \begin{cases} \xi/2 \text{ si } \|a - b\|_\beta < \tau_2 \\ \left(\dfrac{\|a - b\|_\beta - \tau_1}{\tau_2 - \tau_1}\right)^p \times \xi/2 \text{ autrement} \end{cases}$$

où $\|a - b\|_\beta = \sqrt{\beta((x - x')^2 + (y - y')^2) + (1 - \beta)(t - t')^2}$, où *a* est un symbole du dessin d'entrée, *b* est un symbole du dessin de référence ($s_{uj}$), $\beta$ est un paramètre de pondération de manière que $\beta$ E [0,1], x est une première coordonnée d'emplacement d' *a*, *y* est une deuxième coordonnée d'emplacement d'*a*, *x'* est une première coordonnée d'emplacement de *b*, *y'* est une deuxième coordonnée d'emplacement de *b*, *t* est une coordonnée temporelle des coordonnées d'emplacement x et y, *t' est* une coordonnée temporelle des coordonnées d'emplacement *x'* et *y'*, $\tau_1$ est un premier paramètre de tolérance d'erreur, $\tau_2$ est un deuxième paramètre de tolérance d'erreur, $\xi$ est un paramètre de coût de pénalité, $\varepsilon$ représente une série de symboles dont la longueur est égale à 0, et *p* est le degré d'une fonction polynomiale de $c(\varepsilon \to b)$ ou $c(a \to \varepsilon)$.

**7.** Le procédé selon l'une quelconque des revendications précédentes, dans lequel la distance de modification minimale est la distance de modification *min(c(S))*, où $c(S) = \sum_{i=1}^{t} c(e_i)$, où *S* est la séquence de toutes les opérations de modification $e_1$, ..., $e_t$ et *c* est le coût, et dans lequel *min(c(S))* est obtenu par la programmation dynamique en décomposant *min(c(S))* en sous-problèmes, en résolvant chacun de ces sous-problèmes une fois, et en stockant leurs solutions pour résoudre *min(c(S))*.

**8.** Le procédé pour authentifier un utilisateur selon l'une quelconque des revendications précédentes dans lequel l'authentification comprend :

la comparaison du dessin d'entrée avec tous les dessins de référence ($s_{uj}$) et l'authentification positive de l'utilisateur si la distance de modification minimale entre le dessin d'entrée et un quelconque des dessins de référence ($s_{uj}$) est inférieure au seuil donné ; ou

la sélection de l'un des dessins de référence en tant que dessin de référence représentatif, la comparaison du dessin d'entrée avec le dessin de référence représentatif sélectionné ($s_{uj}$) et l'authentification positive de l'utilisateur si la distance de modification minimale entre le dessin d'entrée et le dessin de référence représentatif sélectionné est inférieure au seuil donné ; ou

la génération d'un dessin représentatif à partir des dessins de référence, la comparaison du dessin d'entrée avec le dessin de référence représentatif généré, et l'authentification positive de l'utilisateur si la distance de modification minimale entre le dessin d'entrée et le dessin de référence représentatif généré est inférieure au seuil donné.

**9.** Le procédé pour authentifier un utilisateur selon la revendication 8, dans lequel le ou chaque dessin de référence est entré par l'utilisateur dans un processus d'enregistrement, et dans lequel le processus d'enregistrement comprend l'avertissement de l'utilisateur si le ou chaque dessin de référence est trop facile à deviner et/ou l'avertissement de l'utilisateur si le ou chaque dessin de référence est trop complexe pour être reproduit par l'utilisateur dans le processus d'authentification.

**10.** Le procédé pour authentifier un utilisateur selon l'une quelconque des revendications 8 à 9, dans lequel le ou chaque dessin de référence est entré par l'utilisateur dans un processus d'enregistrement et sauvegardé dans une mémoire, le procédé comprenant de plus :

la sélection de dessin de référence, appelé un dessin de référence aberrant, qui présente la distance de modification maximale par rapport aux autres dessins de référence ; et

le remplacement dans la mémoire du dessin de référence aberrant par le dessin d'entrée.

**11.** Un dispositif pour authentifier un utilisateur en déterminant une mesure de similarité ou de dissimilarité entre un dessin entré par l'utilisateur et au moins un dessin de référence ($s_{uj}$) entré préalablement par l'utilisateur, le dessin d'entrée étant conçu pour être comparé élément d'image par élément d'image avec le ou chaque dessin de référence ($s_{uj}$), l'élément d'image étant un pixel ou on voxel, le dessin d'entrée comprenant une première pluralité d'éléments d'image (5), et le dessin de référence comprenant une deuxième pluralité d'éléments d'image, le dispositif étant **caractérisé en ce que** il comprend :

des moyens d'obtention d'au moins un dessin de référence candidat dessiné par l'utilisateur et la vérification que l'au moins un dessin de référence candidat satisfait à une critère de qualité pour être utilisé en tant que l'au moins un dessin de référence ;

des moyens de détermination, pour chacun de la première et deuxième pluralité d'éléments d'image (5), des coordonnées d'emplacement et temporelles dudit chaque élément d'image, les coordonnées d'emplacement d'un élément de dessin respectif étant les coordonnées de cet élément de dessin sur une toile, la coordonnée temporelle comprenant le moment auquel l'élément d'image respectif du dessin respective a été dessiné, par rapport au moment où l'utilisateur a commencé à dessiner le dessin respectif, les coordonnées d'emplacement et temporelles d'un élément d'image étant appelées ci-après un symbole, les symboles de la première pluralité d'éléments d'image étant appelés ci-après une phrase d'entrée, et les symboles de la deuxième pluralité d'éléments d'image étant appelés ci-après une phrase de référence,

des moyens de détermination d'une mesure de similarité ou de dissimilarité entre la phrase d'entrée et l'au moins une phrase de référence sans générer des vecteurs de caractéristique à partir de la phrase d'entrée, dans lequel les moyens de détermination de la mesure de similarité ou de dissimilarité comprennent des moyens de détermination des valeurs de coûts pour des opérations de modification appliquées aux symboles de la phrase d'entrée symbole par symbole pour transformer la phrase d'entrée en la phrase de référence respective, et des moyens de détermination d'une distance de modification minimale entre les symboles de la phrase d'entrée du dessin d'entrée ($s_{uj}$) et les symboles de la phrase de référence de l'au moins un dessin de référence, dans lequel la distance de modification minimale est la distance de modification de la séquence d'opérations de modification qui transforme la phrase d'entrée du dessin d'entrée en la phrase de référence d'un des dessins de référence avec un coût minimal ; et

des moyens pour authentifier l'utilisateur de manière positive si la distance de modification minimale est inférieure à un seuil donné.

**Fig. 1**

**Fig. 2**

Capture candidate reference sketches —— 11

Check validity of candidate reference sketches —— 13

Define bounding box and centre coordinates —— 15

Capture input sketch —— 17

Represent input sketch as string of symbols —— 19

Compare input sketch with reference sketches —— 21

Determine cost values for symbol edit operations —— 23

Determine minimum string edit distance —— 25

Authenticate user based on string edit distance —— 27

End

**Fig. 3**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0391044 A2

**Non-patent literature cited in the description**

- **DANIEL P. LOPRESTI.** *Ink matching of cursive Chinese handwritten annotations*
- **KASPAR RIESEN et al.** *A Novel Software Toolkit for Graph Edit Distance Computation*
- **XI-YANG LIU et al.** *An Enhanced Drawing Reproduction Graphical Password Strategy*